# EUROPEAN PATENT SPECIFICATION

(11) **EP 2 955 004 B1**
(45) Date of publication and mention of the grant of the patent: **14.11.2018**
(21) Application number: 15171134.8
(22) Date of filing: 09.06.2015
(51) Int. Cl.: B29C 64/106, B29C 64/30, B29C 64/321

(54) **TWO-PART THERMOSETTING RESIN ADDITIVE MANUFACTURING SYSTEM AND ADDITIVE MANUFACTURING METHOD**
HERSTELLUNGSVERFAHREN FÜR ZWEITEILIGES WÄRMEHÄRTBARES HARZADDITIV UND ADDITIVES VERFAHREN
SYSTÈME DE FABRICATION D'ADDITIF DE RÉSINE THERMODURCISSABLE EN DEUX PARTIES ET PROCÉDÉ ADDITIF

(30) Priority: 09.06.2014 US 201462009525 P
(43) Date of publication of application: 16.12.2015
(73) Proprietor: United Technologies Corporation, Farmington, CT 06032 (US)
(72) Inventor: Humbert, Michael Paul, Wethersfield, CT 06106 (US); Wesson, John P., West Hartford, CT 06107 (US); Welch, Brian M., West Hartford, CT 06110 (US)
(74) Representative: Dehns

(56) References cited:
- WO-A1-01/49477
- JP-A- H01 232 024
- US-B1- 6 454 972

## Description

### BACKGROUND

This invention relates generally to the field of additive manufacturing. In particular, the invention relates to a polymer additive manufacturing system employing two-part thermosetting resins.

Additive manufacturing refers to a category of manufacturing methods characterized by the fact that the finished part is created by a layer-wise construction of a plurality of thin layers of material identical in shape to equivalent planar cross sections of an exact digital model of the part. Additive manufacturing may involve applying material by a computer controlled process to a work stage and consolidating the material by an appropriate process to create one layer. The process is repeated up to several thousand times to arrive at the final component.

Polymer additive manufacturing is primarily limited to the use of thermoplastic materials. While polymer manufacturing techniques can produce parts with a wide array of properties, there are many limitations. Specifically, the use of parts made with these technologies is largely limited to temperatures under 120 °C, with a few specialized materials extending the temperature window. Temperature limitations are even more pronounced when printing with flexible materials, whose structural properties tend to degrade at temperatures in the range of 60-80 °C. Regardless of the printing temperature, the upper use temperature will be lower than the extrusion temperature, since softening of the materials will occur as the extrusion temperature is approached. High temperature thermoplastics compound the problem. While they may have high softening temperatures, the high melt viscosity and large temperature gradients result in large residual stresses remaining in the part. This increases the risk of warping, especially if the part is exposed to higher temperatures after fabrication. WO 01/49477 A1 describes a method of model construction comprising the mixing of two components in a mixer. US 6,454,972 B1 describes a method of freeform fabrication of an object. JPH 01232024 A describes the manufacture of a three-dimensional model using a photosetting resin.

### SUMMARY

An additive manufacturing system for forming a component on a layer-by-layer basis includes a first pump for pumping a first material and a second pump for pumping a second material. The additive manufacturing system further includes a mixer for receiving and mixing the first material and the second material to form a thermosetting resin, a nozzle fluidly connected to the mixer for extruding the thermosetting resin, and a motion control system connected to the nozzle for moving the nozzle in a predetermined pattern to form a layer of the component.

An additive manufacturing method of forming a component on a layer-by-layer basis includes pumping a first material from a first pump into a mixer, pumping a second material from a second pump into the mixer, and mixing the first material and the second material in the mixer to form a thermosetting resin. The method further includes extruding the thermosetting resin through a nozzle to deposit the thermosetting resin in a predetermined pattern to form a layer of the component.

### BRIEF DESCRIPTION OF THE DRAWINGS

FIG. 1 is a schematic diagram of an additive manufacturing system that builds parts using a two-component thermosetting resin.
FIG. 2 is a schematic diagram of an alternate embodiment additive manufacturing system.
FIG. 3 is a schematic diagram of an alternate embodiment additive manufacturing system.
FIG. 4 is a schematic diagram of an alternate embodiment additive manufacturing system.

### DETAILED DESCRIPTION

The additive manufacturing system disclosed allows layer-by-layer building of parts using a two-part thermosetting resin, which enables the creation of parts with improved strength and/or flexibility while also extending the range of temperatures in which the parts can operate. The additive manufacturing system uses a mixer to mix two parts of a two-part thermosetting resin on demand. The system extrudes the thermosetting resin through a nozzle before the resin cures. The additive manufacturing system allows for a consistent state of cure of the two-part thermosetting resin exiting the nozzle due to the ability to control the dwell time or residence time of the thermosetting resin in the mixer. The additive manufacturing system improves dimensional accuracy of parts built due to the consistent state of cure of the thermosetting resin. The additive manufacturing system may include large reservoirs of the two parts of a two-part thermosetting resin, as the materials do not react or begin to cure until the two parts are mixed.

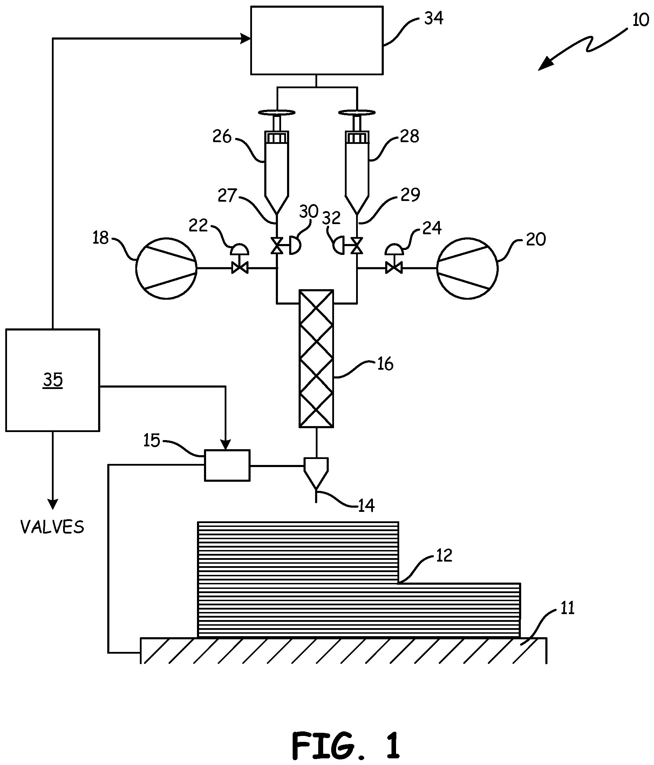

FIG. 1 is a schematic diagram of additive manufacturing system 10, which builds component 12 on platform or support surface 11. Additive manufacturing system 10 includes nozzle 14, motion control system 15, mixer 16, solvent supply 18, solvent supply 20, valve 22, valve 24, pump 26 with orifice 27, pump 28 with orifice 29, valve 30, valve 32, driving mechanism 34, and controller 35.

Additive manufacturing system 10 builds component 12 with a two-part thermosetting resin on a layer-by-layer basis. Pump 26 stores one part of a two-part thermosetting resin and pump 28 stores a second part of a two-part thermosetting resin. One part can be a resin material and the second part can be a hardener material. Driving mechanism 34 simultaneously drives pump 26 and pump 28 to pump the two parts of the thermosetting resin through orifice 27 and orifice 29 and into mixer 16. Driving mechanism 34 may include a first mechanism for driving pump 26 and a second mechanism for driving pump 28 such that pump 26 and pump 28 are driven at different rates in order to control the ratio of the two parts of the two-part thermosetting resin flowing into mixer 16. Orifice 27 and orifice 29 have different diameters in order to control the ratio of the two parts of the two-part thermosetting resin flowing into mixer 16. Pump 26 and pump 28 may be, for example, screw pumps, syringe pumps, or hydraulic pumping mechanisms. Mixer 16 mixes the two parts, and the two parts begin to react to form the two-part thermosetting resin. Mixer 16 may be a static mixer or a dynamic mixer.

The two-part thermosetting resin is subsequently extruded and deposited through nozzle 14 to form a layer of component 12. The diameter of nozzle 14 may be between 0.1 and 1.0 millimeters. A larger diameter of nozzle 14 allows component 12 to be built quickly while a smaller diameter allows for component 12 to be built with a higher resolution. Additive manufacturing system 10 extrudes and deposits the thermosetting resin through nozzle 14 before the two-part thermosetting resin cures. Due to the separation of the two parts of the two-part thermosetting resin, additive manufacturing system 10 controls the dwell time or residence time of the thermosetting resin in the mixer, allowing for a consistent state of cure of the two-part thermosetting resin exiting nozzle 14 throughout the additive manufacturing process. The process is repeated until component 12 is completed.

Controller 35 controls motion control system 15, driving mechanism 34, and valves 22, 24, 30 and 32. Controller 35 controls building of component 12 based on stored data, such as STL files, that define the shape of each layer to be formed. Motion control system 15 provides relative movement of nozzle 14 with respect to surface 11 in the x, y, and z directions to deposit the two-part thermosetting resin on surface 11 to form a layer of component 12. In one embodiment, motion control system 15 may move nozzle 14 in three dimensions. In an alternative embodiment, motion control system 15 may move surface 11 in the z direction while moving nozzle 14 in the x and y directions. In alternative embodiments, motion control system 15 may control movement of surface 11 and nozzle 14 in any combination of x, y, and z directions. Other alternative embodiments may include the use of up to five axes of motion control such that surface 11 can be rotated and the angle of nozzle 14 relative to the normal of surface 11 can be controlled either by movement of surface 11 or nozzle 14. Controller 35 may send signals to open and close valves 22, 24, 30, and 32 when necessary. In an alternative embodiment, valves 22, 24, 30, and 32 are controlled manually.

The two-part thermosetting resin may be an epoxy. In alternative embodiments, the two-part thermosetting resin may be an urethane or an acrylic. In alternative embodiments, one or both of the parts of the two-part resin may include one or more additives. The additives may be a filler, a catalyst, a viscosity modifier, a thickener, a high temperature crosslinker, or an accelerator. More specifically, the additives may be silica, calcium carbonate, iron oxide, clay (such as Garamite®), zinc oxide, a platinum-based catalyst, carbon black, graphite, graphene, graphene oxide, chopped glass fiber, iron-based ferromagnetic nanomaterial, nickel-based ferromagnetic material, or a ceramic, seen in Table 1 below.

| **Table 1** | |
|---|---|
| **Filler** | **Purpose** |
| CaCO₃, Fe oxides, clays (Garamite®) | Thixotropic (shear-thinning) thickener |
| ZnO | Thickener / high temperature crosslinker (for post-curing) |
| Carbon black, Graphite | Increased thermal and electrical conductivity |
| Graphene / graphene oxide | Increased strength, conductivity; may be thixotropic |
| Chopped glass fibers | Strength and thermal conductivity |
| Fe and Ni-based ferromagnetic nanomaterials | Localized heating through induction |
| Ceramics | Strength, electrical resistivity |

Solvent supply 18 and solvent supply 20 may be used to flush additive manufacturing system 10 or unclog additive manufacturing system 10 if additive manufacturing system 10 becomes clogged with material from pump 26 and pump 28. Valve 30 and valve 32 allow the two parts of the thermosetting resin to flow from pump 26 and pump 28 and may be closed to prevent material flow from pump 26 and pump 28. Valve 22 and valve 24 allow solvent from solvent supply 18 and solvent supply 20 to flow into additive manufacturing system to flush additive manufacturing system 10. Valve 22, valve 24, valve 30, and valve 32 may be check valves, manual valves, or solenoid valves.

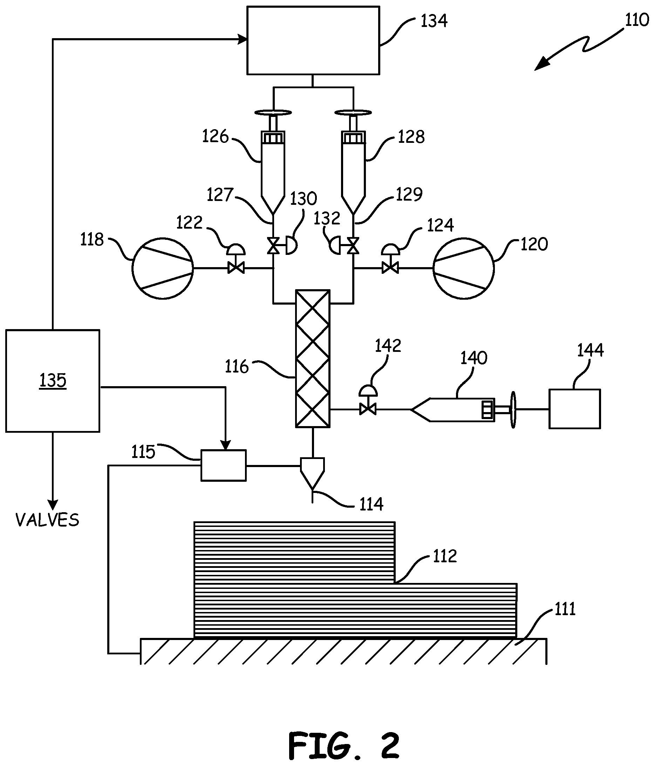

FIG. 2 is a schematic diagram of additive manufacturing system 110, an alternate embodiment of additive manufacturing system 10. Additive manufacturing system 110 builds component 112 on platform or support surface 111. Additive manufacturing system 110 includes nozzle 114, motion control system 115, mixer 116, solvent supply 118, solvent supply 120, valve 122, valve 124, pump 126 with orifice 127, pump 128 with orifice 129, valve 130, valve 132, driving mechanism 134, controller 135, pump 140, valve 142, and driving mechanism 144. Additive manufacturing system 110 is similar to additive manufacturing system 10, shown and described with respect to FIG. 1, although there are differences. For example, additive manufacturing system 110 includes pump 140, which stores an additive material. Driving mechanism 134 drives pump 140 to pump an additive material into mixer 116. In mixer 116, the additive material is mixed in with the two-part thermosetting resin. The additive material may be a filler, a catalyst, a viscosity modifier, a thickener, a high temperature crosslinker, or an accelerator, or any other additive material described with respect to FIG. 1. Pump 140 may be a screw pump, a syringe pump, or a hydraulic pumping mechanism. Valve 142 may prevent material from flowing into mixer 116 from pump 140.

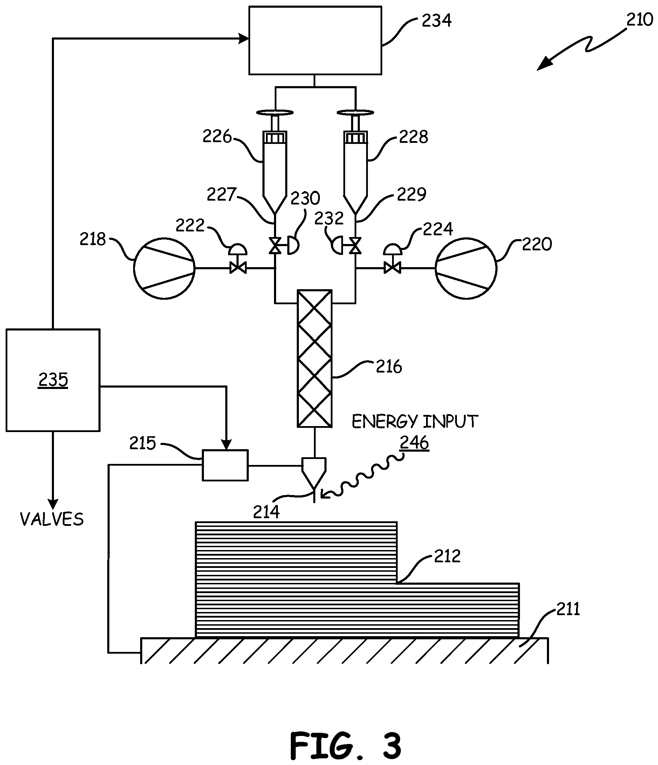

FIG. 3 is a schematic diagram of additive manufacturing system 210, an alternate embodiment of additive manufacturing system 10. Additive manufacturing system 210 builds component 212 on platform or support surface 211. Additive manufacturing system 210 includes nozzle 214, motion control system 215, mixer 216, solvent supply 218, solvent supply 220, valve 222, valve 224, pump 226 with orifice 227, pump 228 with orifice 229, valve 230, valve 232, driving mechanism 234, controller 235, and energy input 246. Additive manufacturing system 210 is similar to additive manufacturing system 10, shown and described with respect to FIG. 1, although there are differences. For example, additive manufacturing system 210 includes energy input 246. Energy input 246 may enhance the curing of the two-part thermosetting resin extruded and deposited from nozzle 214.

Energy input 246 may provide a stream of hot air directed at the two-part thermosetting resin leaving nozzle 214 in order to accelerate the rate at which the two-part thermosetting resin cures. In alternative embodiments, energy input 246 may be electromagnetic radiation such as microwave radiation, ultraviolet radiation, visible light, or infrared radiation. In alternate embodiments, the two-part thermosetting resin may include an additive that enhances local heat generation when exposed to energy input 246. The additive may be any material described with respect to FIG. 1. For example, magnetic materials such as ferrite could enable induction to rapidly heat the two-part thermosetting resin leaving nozzle 214. Carbon black could allow more efficient absorption of electromagnetic radiation.

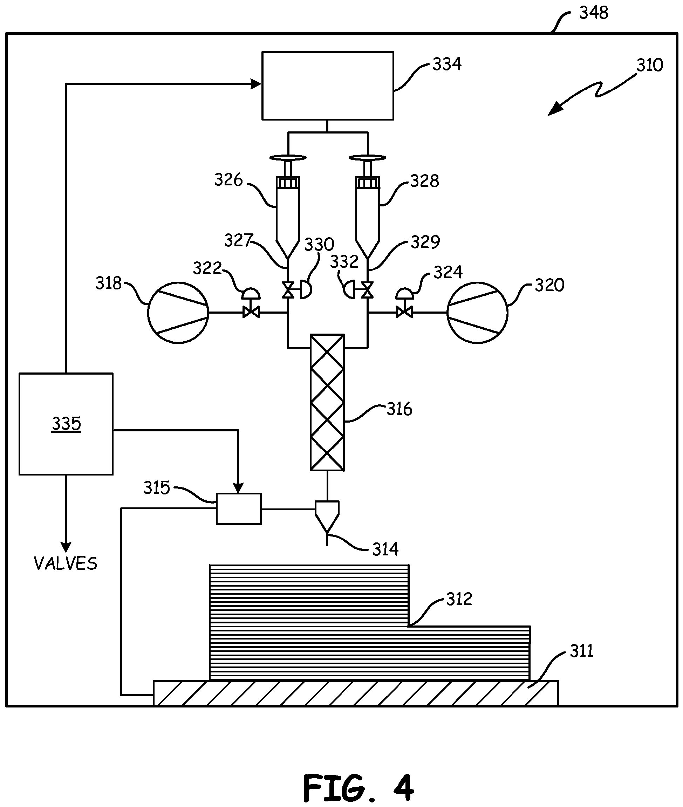

FIG. 4 is a schematic diagram additive manufacturing system 310, an alternate embodiment of additive manufacturing system 10. Additive manufacturing system 310 builds component 312 on platform or support surface 311. Additive manufacturing system 310 includes nozzle 314, motion control system 315, mixer 316, solvent supply 318, solvent supply 320, valve 322, valve 324, pump 326 with orifice 327, pump 328 with orifice 329, valve 330, valve 332, driving mechanism 334, and controller 335. Heated build chamber 348 surrounds additive manufacturing system 310. Additive manufacturing system 310 is similar to additive manufacturing system 10, shown and described with respect to FIG. 1, although there are differences. For example, heated build chamber 348 surrounds additive manufacturing system 310.

Heated build chamber 348 may accelerate the rate at which the two-part thermosetting resin cures. In order to prevent the two-part thermosetting resin from curing such that it clogs additive manufacturing system 310, mixer 316 may include a heat exchanger, a cooling manifold, or a heat shield, which prevents the two-part thermosetting resin from curing at an accelerated rate prior to deposition from nozzle 314. Nozzle 314 may also include a heat exchanger, a cooling manifold, or a heat shield, which prevents the two-part thermosetting resin from curing at an accelerated rate prior to deposition from nozzle 314.

### Discussion of Possible Embodiments

An additive manufacturing system for forming a component on a layer-by-layer basis according to appended claim 1.

The additive manufacturing system of the preceding paragraph can optionally include, additionally and/or alternatively, any one or more of the following features, configurations and/or additional components:
A further embodiment of the foregoing additive manufacturing system, wherein the first material includes a resin and the second material includes a hardener.

A further embodiment of any of the foregoing additive manufacturing systems, wherein at least one of the first material and the second material further includes at least one of a filler, a catalyst, a viscosity modifier, a thickener, a high temperature crosslinker, and an accelerator.

A further embodiment of any of the foregoing additive manufacturing systems, wherein at least one of the first material and the second material further includes at least one of silica, calcium carbonate, iron oxide, clay, zinc oxide, a platinum-based catalyst, carbon black, graphite, graphene, graphene oxide, chopped glass fiber, iron-based ferromagnetic nanomaterial, nickel-based ferromagnetic material, and a ceramic.

A further embodiment of any of the foregoing additive manufacturing systems, wherein the thermosetting resin includes at least one of an epoxy, an urethane, and an acrylic.

A further embodiment of any of the foregoing additive manufacturing systems, further including a third pump for pumping a third material into the mixer.

A further embodiment of any of the foregoing additive manufacturing systems, wherein the first pump, the second pump, and the third pump include at least one of a syringe pump, a screw pump, or a hydraulic pumping mechanism.

A further embodiment of any of the foregoing additive manufacturing systems, wherein the third material includes at least one of a filler, a catalyst, a viscosity modifier, a thickener, a high temperature crosslinker, and an accelerator.

A further embodiment of any of the foregoing additive manufacturing systems, wherein the third material further includes at least one of silica, calcium carbonate, iron oxide, clay, zinc oxide, a platinum-based catalyst, carbon black, graphite, graphene, graphene oxide, chopped glass fiber, iron-based ferromagnetic nanomaterial, nickel-based ferromagnetic material, and a ceramic.

A further embodiment of any of the foregoing additive manufacturing systems, the system further including an energy input that imparts energy to the thermosetting resin extruded from the nozzle, wherein the energy input is at least one of a stream of hot air, a magnetic field, ultraviolet radiation, infrared radiation, microwave radiation, and visible light.

A further embodiment of any of the foregoing additive manufacturing systems, the system further including a driving mechanism for driving the first pump and the second pump, wherein the driving mechanism controls a ratio of the first material to the second material being pumped into the mixer.

A further embodiment of any of the foregoing additive manufacturing systems, wherein the driving mechanism includes a first mechanism for driving the first pump and a second mechanism for driving the second pump.

A further embodiment of any of the foregoing additive manufacturing systems, the system further including a heated chamber enclosing the additive manufacturing system.

A further embodiment of any of the foregoing additive manufacturing systems, wherein the mixer includes at least one of a heat exchanger, a cooling manifold, and a heat shield.

An additive manufacturing method of forming a component on a layer-by-layer basis according to appended claim 7.

The additive manufacturing method of the preceding paragraph can optionally include, additionally and/or alternatively, any one or more of the following features, configurations and/or additional components.

A further embodiment of any of the foregoing additive manufacturing methods, the method further including inputting energy to the thermosetting resin during or after extrusion of the thermosetting resin from the nozzle, wherein the energy is at least one of a stream of hot air, a magnetic field, ultraviolet radiation, infrared radiation, microwave radiation, and visible light.

A further embodiment of any of the foregoing additive manufacturing methods, the method further including driving the first pump and the second pump with a driving mechanism and controlling a ratio of the first material to the second material being pumped into the mixer with the driving mechanism.

A further embodiment of any of the foregoing additive manufacturing methods, the method further including heating the thermosetting resin extruded from the nozzle and preventing heating of the mixer with at least one of a heat exchanger, a cooling manifold, and a heat shield.

## Claims

1. An additive manufacturing system (10;110;210;310) for forming a component (12;112;212;312) on a layer-by-layer basis, the system (10;110;210;310) comprising:
a first pump (26;126;226;326) for pumping a first material that comprises a resin;
a second pump (28;128;228;328) for pumping a second material that comprises a hardener;
a mixer (16;116;216;316) for receiving and mixing the first material and the second material to form a thermosetting resin that comprises at least one of an epoxy, a urethane and an acrylic;
a nozzle (14;114;214;314) fluidly connected to the mixer (16;116;216;316) for extruding the thermosetting resin; and
a motion control system (15;115;215;315) connected to the nozzle (14;114;214;314) for moving the nozzle (14;114;214;314) in a predetermined pattern to form a layer of the component (12;112;212;312);
wherein the first pump defines a first orifice (27;127;227;327)
with a first diameter, the first orifice located between the first pump and the mixer;
wherein the second pump defines a second orifice (29;129;229;329) with a second diameter, the second orifice located between the second pump and the mixer;
wherein the first diameter is different than the second diameter; and wherein relative sizes of the first diameter and the second diameter control a ratio of the first material to the second material being pumped into the mixer; and
wherein the system is configured such that the thermosetting resin has a residence time in the mixer such that the thermosetting resin hardens after the thermosetting resin is deposited.

2. The system of any preceding claim, and further comprising a third pump (140) for pumping a third material into the mixer (116), wherein the first pump (26;126;226;326), the second pump (28;128;228;328), and the third pump (140) comprise at least one of a syringe pump, a screw pump, or a hydraulic pumping mechanism.

3. The system of any preceding claim, and further comprising:
an energy input that imparts energy to the thermosetting resin extruded from the nozzle;
wherein the energy input is at least one of a stream of hot air, a magnetic field, ultraviolet radiation, infrared radiation, microwave radiation, and visible light.

4. The system of any preceding claim, and further comprising a heated chamber (348) enclosing the additive manufacturing system (310).

5. The system of any preceding claim, wherein the mixer (316) comprises at least one of a heat exchanger, a cooling manifold, and a heat shield.

6. The system of any preceding claim, and further comprising:
a driving mechanism (34,134;234;334) for driving the first pump (26;126;226;326) and the second pump (28;128;228;328);
wherein the driving mechanism (34,134;234;334) controls a ratio of the first material to the second material being pumped into the mixer (16;116;216;316), wherein, optionally, the driving mechanism (34,134;234;334) comprises a first mechanism for driving the first pump (26;126;226;326) and a second mechanism for driving the second pump (28;128;228;328).

7. An additive manufacturing method of forming a component (12;112;212;312) on a layer-by-layer basis, the method comprising:
pumping a first material that comprises a resin from a first pump (26;126;226;326) into a mixer (16;116;216;316), the first pump defining a first orifice (27;127;227;327) having a first diameter;
pumping a second material that comprises a hardener from a second pump (28;128;228;328) into the mixer (16;116;216;316), the second pump defining a second orifice (29;129;229;329) having a second diameter different from the first diameter; wherein relative sizes of the first diameter and the second diameter control a ratio of the first material to the second material being pumped into the mixer (16;116;216;316);
mixing the first material and the second material in the mixer (16;116;216;316) to form a thermosetting resin that comprises at least one of an epoxy, a urethane and an acrylic; and
extruding the thermosetting resin through a nozzle (14;114;214;314) to deposit the thermosetting resin in a predetermined pattern to form a layer of the component (12;112;212;312), wherein the thermosetting resin has a residence time in the mixer such that the thermosetting resin hardens after the thermosetting resin is deposited.

8. The method of claim 7, and further comprising:
inputting energy to the thermosetting resin during or after extrusion of the thermosetting resin from the nozzle (14;114;214;314);
wherein the energy is at least one of a stream of hot air, a magnetic field, ultraviolet radiation, infrared radiation, microwave radiation, and visible light.

9. The method of claim 7 or 8, and further comprising:
driving the first pump (26;126;226;326) and the second pump (28;128;228;328) with a driving mechanism (34,134;234;334); and
controlling a ratio of the first material to the second material being pumped into the mixer (16;116;216;316) with the driving mechanism (34,134;234;334).

10. The method of any of claims 7 to 9, and further comprising:
heating the thermosetting resin extruded from the nozzle (14;114;214;314); and
preventing heating of the mixer (16;116;216;316) with at least one of a heat exchanger, a cooling manifold, and a heat shield.

## Patentansprüche

1. Additives Herstellungssystem (10; 110; 210; 310) zum Bilden einer Komponente (12; 112; 212; 312) auf einer Schicht-um-Schicht-Basis, wobei das System (10; 110; 210; 310) Folgendes umfasst:
eine erste Pumpe (26; 126; 226; 326) zum Pumpen eines ersten Materials, das ein Harz umfasst;
eine zweite Pumpe (28; 128; 228; 328) zum Pumpen eines zweiten Materials, das ein Härtungsmittel umfasst;
einen Mischer (16; 116; 216; 316) zum Aufnehmen und Mischen des ersten Materials und des zweiten Materials, um ein wärmehärtbares Harz zu bilden, das zumindest eines von einem Epoxid, einem Urethan und einem Acryl umfasst;
eine Düse (14; 114; 214; 314), die fluidisch mit dem Mischer (16; 116; 216; 316) verbunden ist, um das wärmehärtbare Harz zu extrudieren; und
ein Bewegungssteuersystem (15; 115; 215; 315), das mit der Düse (14; 114; 214; 314) verbunden ist, um die Düse (14; 114; 214; 314) in einem zuvor festgelegten Muster zu bewegen, um eine Schicht der Komponente (12; 112; 212; 312) zu bilden;
wobei die erste Pumpe eine erste Öffnung (27; 127; 227; 327) mit einem ersten Durchmesser definiert, wobei sich die erste Öffnung zwischen der ersten Pumpe und dem Mischer befindet;
wobei die zweite Pumpe eine zweite Öffnung (29; 129; 229; 329) mit einem zweiten Durchmesser definiert, wobei sich die zweite Öffnung zwischen der zweiten Pumpe und dem Mischer befindet; wobei sich der erste Durchmesser von dem zweiten Durchmesser unterscheidet; und
wobei relative Größen des ersten Durchmessers und des zweiten Durchmessers ein Verhältnis von dem ersten Material zu dem zweiten Material, die in den Mischer gepumpt werden, steuern; und
wobei das System derart ausgelegt ist, dass das wärmehärtbare Harz eine Verweildauer in dem Mischer aufweist, sodass das wärmehärtbare Harz härtet, nachdem das wärmehärtbare Harz abgelagert ist.

2. System nach einem vorhergehenden Anspruch, und ferner umfassend eine dritte Pumpe (140) zum Pumpen eines dritten Materials in den Mischer (116), wobei die erste Pumpe (26; 126; 226; 326), die zweite Pumpe (28; 128; 228; 328) und die dritte Pumpe (140) zumindest eines von einer Spritzenpumpe, einer Schraubenpumpe oder einem hydraulischen Pumpmechanismus umfassen.

3. System nach einem vorhergehenden Anspruch, und ferner umfassend:
einen Energieeingang, der dem aus der Düse extrudierten wärmehärtbaren Harz Energie verleiht;
wobei der Energieeingang zumindest eines von einem Strom an heißer Luft, einem Magnetfeld, Ultraviolettstrahlung, Infrarotstrahlung, Mikrowellenstrahlung und sichtbarem Licht ist.

4. System nach einem vorhergehenden Anspruch, und ferner umfassend eine erwärmte Kammer (348), die das additive Herstellungssystem (310) einschließt.

5. System nach einem vorhergehenden Anspruch, wobei der Mischer (316) zumindest eines von einem Wärmetauscher, einem Kühlkrümmer und einem Hitzeschild umfasst.

6. System nach einem vorhergehenden Anspruch, und ferner umfassend:
einen Antriebsmechanismus (34; 134; 234; 334) zum Antreiben der ersten Pumpe (26; 126; 226; 326) und der zweiten Pumpe (28; 128; 228; 328);
wobei der Antriebsmechanismus (34; 134; 234; 334) ein Verhältnis von dem ersten Material zu dem zweiten Material, die in den Mischer (16; 116; 216; 316) gepumpt werden, steuert, wobei optional der Antriebsmechanismus (34; 134; 234; 334) einen ersten Mechanismus zum Antreiben der ersten Pumpe (26; 126; 226; 326) und einen zweiten Mechanismus zum Antreiben der zweiten Pumpe (28; 128; 228; 328) umfasst.

7. Additives Herstellungsverfahren zum Bilden einer Komponente (12; 112; 212; 312) auf einer Schicht-um-Schicht-Basis, wobei das Verfahren Folgendes umfasst:
Pumpen eines ersten Materials, das ein Harz umfasst, von einer ersten Pumpe (26; 126; 226; 326) in einen Mischer (16; 116; 216; 316), wobei die erste Pumpe eine erste Öffnung (27; 127; 227; 327) definiert, die einen ersten Durchmesser aufweist;
Pumpen eines zweiten Materials, das ein Härtungsmittel umfasst, von einer zweiten Pumpe (28; 128; 228; 328) in den Mischer (16; 116; 216; 316), wobei die zweite Pumpe eine zweite Öffnung (29; 129; 229; 329) definiert, die einen zweiten Durchmesser aufweist, der sich von dem ersten Durchmesser unterscheidet; wobei relative Größen des ersten Durchmessers und des zweiten Durchmessers ein Verhältnis von dem ersten Material zu dem zweiten Material, die in den Mischer (16; 116; 216; 316) gepumpt werden, steuern;
Mischen des ersten Materials und des zweiten Materials in dem Mischer (16; 116; 216; 316), um ein wärmehärtbares Harz zu bilden, das zumindest eines von einem Epoxid, einem Urethan und einem Acryl umfasst; und
Extrudieren des wärmehärtbaren Harzes durch eine Düse (14; 114; 214; 314), um das wärmehärtbare Harz in einem zuvor festgelegten Muster abzulagern, um eine Schicht der Komponente (12; 112; 212; 312) zu bilden; wobei das wärmehärtbare Harz eine Verweildauer in dem Mischer aufweist, sodass das wärmehärtbare Harz härtet, nachdem das wärmehärtbare Harz abgelagert ist.

8. Verfahren nach Anspruch 7, und ferner umfassend:
Eingeben von Energie in das wärmehärtbare Harz während oder nach der Extrusion des wärmehärtbaren Harzes aus der Düse (14; 114; 214; 314);
wobei die Energie zumindest eines von einem Strom an heißer Luft, einem Magnetfeld, Ultraviolettstrahlung, Infrarotstrahlung, Mikrowellenstrahlung und sichtbarem Licht ist.

9. Verfahren nach Anspruch 7 oder 8, und ferner umfassend:
Antreiben der ersten Pumpe (26; 126; 226; 326) und der zweiten Pumpe (28; 128; 228; 328) mit einem Antriebsmechanismus (34; 134; 234; 334); und
Steuern eines Verhältnisses von dem ersten Material zu dem zweiten Material, die in den Mischer (16; 116; 216; 316) gepumpt werden, mit dem Antriebsmechanismus (34; 134; 234; 334).

10. Verfahren nach einem der Ansprüche 7 bis 9, und ferner umfassend:
Erwärmen des aus der Düse (14; 114; 214; 314) extrudierten wärmehärtbaren Harzes; und
Verhindern des Erwärmens des Mischers (16; 116; 216; 316) mit zumindest einem von einem Wärmetauscher, einem Kühlkrümmer und einem Hitzeschild.

## Revendications

1. Système de fabrication additive (10 ; 110 ; 210 ; 310) permettant de former un composant (12 ; 112 ; 212 ; 312) sur une base couche par couche, le système (10 ; 110 ; 210 ; 310) comprenant :
une première pompe (26 ; 126 ; 226 ; 326) permettant de pomper un premier matériau qui comprend une résine ;
une deuxième pompe (28 ; 128 ; 228 ; 328) permettant de pomper un deuxième matériau qui comprend un durcisseur ;
un mélangeur (16 ; 116 ; 216 ; 316) permettant de recevoir et mélanger le premier matériau et le deuxième matériau pour former une résine thermodurcissable qui comprend au moins l'un d'une résine époxyde, un uréthane et un acrylique ;
une buse (14 ; 114 ; 214 ; 314) reliée de manière fluidique au mélangeur (16 ; 116 ; 216 ; 316) afin d'extruder la résine thermodurcissable ; et
un système de commande de déplacement (15 ; 115 ; 215 ; 315) relié à la buse (14 ; 114 ; 214 ; 314) afin de déplacer la buse (14 ; 114 ; 214 ; 314) dans un modèle prédéterminé pour former une couche du composant (12 ; 112 ; 212 ; 312) ;
dans lequel la première pompe définit un premier orifice (27 ; 127 ; 227 ; 327) avec un premier diamètre, le premier orifice étant situé entre la première pompe et le mélangeur ;
dans lequel la deuxième pompe définit un second orifice (29 ; 129 ; 229 ; 329) avec un second diamètre, le second orifice étant situé entre la deuxième pompe et le mélangeur ;
dans lequel le premier diamètre est différent du second diamètre ; et
dans lequel les tailles relatives du premier diamètre et du second diamètre commandent un rapport entre le premier matériau et le deuxième matériau qui sont pompés dans le mélangeur ; et
dans lequel le système est configuré de sorte que la résine thermodurcissable ait un temps de séjour dans le mélangeur de sorte que la résine thermodurcissable durcisse après que la résine thermodurcissable a été déposée.

2. Système selon une quelconque revendication précédente, et comprenant en outre une troisième pompe (140) permettant de pomper un troisième matériau dans le mélangeur (116), dans lequel la première pompe (26 ; 126 ; 226 ; 326), la deuxième pompe (28 ; 128 ; 228 ; 328) et la troisième pompe (140) comprennent au moins l'un d'une pompe à seringue, une pompe à vis, ou un mécanisme de pompage hydraulique.

3. Système selon une quelconque revendication précédente, et comprenant en outre :
une entrée d'énergie qui transmet de l'énergie à la résine thermodurcissable extrudée à partir de la buse ;
dans lequel l'entrée d'énergie est au moins l'un d'un flux d'air chaud, un champ magnétique, un rayonnement ultraviolet, un rayonnement infrarouge, un rayonnement micrométrique, et la lumière visible.

4. Système selon une quelconque revendication précédente, et comprenant en outre une chambre chauffée (348) renfermant le système de fabrication additive (310).

5. Système selon une quelconque revendication précédente, dans lequel le mélangeur (316) comprend au moins l'un d'un échangeur thermique, un collecteur de refroidissement, et un écran thermique.

6. Système selon une quelconque revendication précédente, et comprenant en outre :
un mécanisme d'entraînement (34, 134 ; 234 ; 334) permettant d'entraîner la première pompe (26 ; 126 ; 226 ; 326) et la deuxième pompe (28 ; 128 ; 228 ; 328) ;
dans lequel le mécanisme d'entraînement (34, 134 ; 234 ; 334) commande un rapport entre le premier matériau et le deuxième matériau qui sont pompés dans le mélangeur (16 ; 116 ; 216 ; 316), dans lequel, éventuellement, le mécanisme d'entraînement (34, 134 ; 234 ; 334) comprend un premier mécanisme permettant d'entraîner la première pompe (26 ; 126 ; 226 ; 326) et un second mécanisme permettant d'entraîner la deuxième pompe (28 ; 128 ; 228 ; 328).

7. Procédé de fabrication additive consistant à former un composant (12 ; 112 ; 212 ; 312) sur une base couche par couche, le procédé comprenant :
le pompage d'un premier matériau qui comprend une résine à partir d'une première pompe (26 ; 126 ; 226 ; 326) dans un mélangeur (16; 116; 216 ; 316), la première pompe définissant un premier orifice (27 ; 127 ; 227 ; 327) ayant un premier diamètre ;
le pompage d'un deuxième matériau qui comprend un durcisseur à partir d'une deuxième pompe (28 ; 128 ; 228 ; 328) dans le mélangeur (16; 116; 216; 316), la deuxième pompe définissant un second orifice (29 ; 129 ; 229 ; 329) ayant un second diamètre différent du premier diamètre ;
dans lequel les tailles relatives du premier diamètre et du second diamètre commandent un rapport entre le premier matériau et le deuxième matériau qui sont pompés dans le mélangeur (16 ; 116 ; 216 ; 316) ;
le mélange du premier matériau et du deuxième matériau dans le mélangeur (16; 116; 216; 316) pour former une résine thermodurcissable qui comprend au moins l'un d'une résine époxyde, un uréthane et un acrylique ; et
l'extrusion de la résine thermodurcissable par le biais d'une buse (14 ; 114 ; 214 ; 314) pour déposer la résine thermodurcissable dans un modèle prédéterminé pour former une couche du composant (12 ; 112 ; 212 ; 312), dans lequel la résine thermodurcissable a un temps de séjour dans le mélangeur de sorte que la résine thermodurcissable durcisse après que la résine thermodurcissable a été déposée.

8. Procédé selon la revendication 7, et comprenant en outre :
l'entrée d'énergie dans la résine thermodurcissable pendant ou après l'extrusion de la résine thermodurcissable à partir de la buse (14 ; 114 ; 214 ; 314) ;
dans lequel l'énergie est au moins l'un d'un flux d'air chaud, un champ magnétique, un rayonnement ultraviolet, un rayonnement infrarouge, un rayonnement micrométrique, et la lumière visible.

9. Procédé selon la revendication 7 ou 8, et comprenant en outre :
l'entraînement de la première pompe (26 ; 126 ; 226 ; 326) et de la deuxième pompe (28 ; 128 ; 228 ; 328) avec un mécanisme d'entraînement (34, 134 ; 234 ; 334) ; et
la commande d'un rapport entre le premier matériau et le deuxième matériau qui sont pompés dans le mélangeur (16 ; 116 ; 216 ; 316) avec le mécanisme d'entraînement (34, 134 ; 234 ; 334) .

10. Procédé selon l'une quelconque des revendications 7 à 9, et comprenant en outre :
le chauffage de la résine thermodurcissable extrudée à partir de la buse (14 ; 114 ; 214 ; 314) ; et
le fait d'empêcher le chauffage du mélangeur (16 ; 116 ; 216 ; 316) avec au moins l'un d'un échangeur thermique, un collecteur de refroidissement, et un écran thermique.
